# EUROPEAN PATENT SPECIFICATION

(11) **EP 1 753 237 B1**
(45) Date of publication and mention of the grant of the patent: **12.05.2010**
(21) Application number: 05291708.5
(22) Date of filing: 10.08.2005
(51) Int. Cl.: H04N 7/00

(54) **Scheduling for Internet Protocol Television Broadcast**
Ablaufsteuerung für Internet Protokoll Fernsehrundfunk
Ordonnancement pour la télédiffusion à protocole Internet

(43) Date of publication of application: 14.02.2007
(73) Proprietor: Alcatel Lucent, 75008 Paris (FR)
(72) Inventor: Kisel, Andrey, Maidenhead, Berkshire SL6 8DH (GB); Molloy, Steve, Bristol BS83 F (GB); Chamberlain, Michael, Wargrave, Berkshire RG10 8BN (GB)
(74) Representative: Narmon, Gisèle Marie Thérèse

(56) References cited:
- EP-A- 0 394 939
- EP-A- 0 759 676
- US-A1- 2003 093 530
- US-B1- 7 024 681

## Description

The invention relates to a system comprising storing means adapted to store schedules and comprising executing nodes adapted to execute the schedules.

A node may for example be a server node forming part of a system in the form of a server or may for example be a network node forming part of a system in the form of a network.

A prior art system is known from US 2003/0172212 A1, which discloses a round robin arbitration system. As disclosed in paragraph 0005 of US 2003/0172212 A1, round robin arbitration is defined by sequential, cyclical allocation of resources to numerous requesters.

The known system is disadvantageous, inter alia, owing to the fact that round robin arbitration requires the nodes to be monitored by a monitoring process. Such a monitoring process makes the system relatively complex. Further, the monitoring process forms a so-called single point of failure. In case the monitoring process fails, the whole system fails.

It is an object of the invention, inter alia, to provide a system as defined above that is relatively simple.

The system according to the invention is characterized in that the executing nodes comprise a first executing node and a second executing node, in that the first executing node comprises first checking means adapted to check the storing means based on a load of said first executing node, first collecting means adapted to collect first schedules based on an own initiative of said first executing node, and first marking means adapted to mark the first schedules in the storing means, and in that the second executing node comprises second checking means adapted to check the storing means based on a load of said second executing node, second collecting means adapted to collect second schedules based on an own initiative of said second executing node, and second marking means adapted to mark the second schedules in the storing means.

By introducing, per node, the checking means for checking the storing means on the executing node's own initiative and in dependence of an executing node's load and the collecting means for collecting the schedules on the executing node's own initiative, all without the executing node being monitored by a monitoring process of a system supervisor, the system according to the invention has become relatively simple. By making the checking of the storing means by an executing node dependent on this executing node's load, a checking hierarchy has been created, to avoid arbitration.

The system according to the invention is further advantageous, inter alia, in that at least one so-called single point of failure has been removed (the monitoring process). This makes the system according to the invention more reliable.

The first marking means of the first executing node for example mark a first schedule as "being executed" in case the first collecting means of the first executing node want to collect or are collecting or have collected this first schedule. As a result, the second checking means of the second executing node will, while checking the storing means, ignore or overlook or not even find this first schedule.

It is to be noted that the European Patent Application EP-A-0 394 939 of SONY CORPORATION (31 October 1990) entitled "Program transmission system and method" discloses a broadcast program transmission control apparatus and method using a scheduling computer to produce program scheduling signals representing a schedule of programs to be generated at predetermined times by respective ones of a plurality of program generation devices. Each program generation device is provided with a corresponding controller into which the respective program scheduling signals are downloaded from the scheduling computer; and a switching device is operative to switch the programs generated by the program generation devices to a master broadcast output.

Furthermore, the European Patent Application EP-A-0 759 676 of INTERNATIONAL BUSINESS MACHINES CORPORATION; INTERNATIONAL BUSINESS MA (26 February 1997) entitled "Scheduling videos in a video-on-demand system" discloses a system and method for scheduling the number of channels in video-on-demand servers so as to deal with time varying load. The scheduling process is hierarchical. A higher level scheduler controls the rate of channel consumption based on anticipated load, and a lower level scheduler selects the waiting client requests to be served when a channel is allocated by the higher level scheduler.

Finally, the US Patent Application US 2003/093530 A1 of SYED MAJID (15 May 2003) entitled "Arbitrator system and method for national and local content distribution" discloses a system and method for intelligently scheduling, through multilevel arbitration, broadcast digital radio content and advertising using a sophisticated communication protocol. Arbitration of broadcast time slots is based on classifications, prioritization, level of service required, bit rate and QoS (quality of service) requirements, best acceptable effort, and type of data (e.g., audio, video, graphics, text) broken into real-time or non-real-time determinations. A hierarchical gateway system is used to arbitrate and schedule the broadcasted content for each broadcast station (exciter). The broadcasted content includes material from national and local content providers to include music, video, graphics, text, and partial content downloads. A central gateway receives requests from national content providers to fill broadcast slots. The requests include the parameters necessary to, not only arbitrate content and advertising, but also to arbitrate based on a recognition of specific content type, requirement for broadcast, and end user device requirements.

However, none of these last three above-cited documents disclose nor teach the advantageous features of the present invention.

An embodiment of the system according to the invention is characterized in that the first executing node comprises a first event driven scheduler adapted to control the first means and in that the second executing node comprises a second event driven scheduler adapted to control the second means.

The schedulers are event driven or schedule driven and control the means. These means may form part of the schedulers or not.

An embodiment of the system according to the invention is characterized in that the executing nodes compete for executing the schedules in a load balanced way.

Without the executing nodes being monitored by a monitoring process of a system supervisor, the executing nodes will be in competition with each other. The fact that the schedules are executed in a load balanced way may for example result from the checking of the storing means by an executing node being dependent on this executing node's load.

An embodiment of the system according to the invention is characterized in that the first checking means is adapted to check the storing means a first predefined time-interval ahead of an actual schedule and the second checking means is adapted to check the storing means a second predefined time-interval ahead of an actual schedule, the first predefined time-interval depending on the load of the first executing node and the second predefined time-interval depending on the load of the second executing node.

The fact that the different checking means check the storing means different predefined time-intervals ahead of the actual schedule, which different time-intervals depend on the nodes' loads, is one way to make the execution of the schedules load balanced. Other ways to make the execution of the schedules load balanced are not to be excluded.

An embodiment of the system according to the invention is characterized in that the schedules are defined by time information and type information.

The time information defines for example when the schedule is to be executed and the type information defines for example to which category the schedule belongs.

An embodiment of the system according to the invention is characterized in that the time information comprises a start time and a stop time and in that the type information defines a type and a destination.

The destination may be in the form of an internet protocol address, without excluding other addresses such as medium access control addresses and uniform resource locators. The type for example defines a broadcast or a content distribution or a content delivery.

An embodiment of the system according to the invention is characterized in that the executing nodes form a cluster of nodes, the cluster of nodes being adapted to deliver services in a load balanced way.

The load balancing of a cluster of nodes generally offers more possibilities and better results than the load balancing of only a few nodes.

An embodiment of the system according to the invention is characterized in that the system comprises an internet protocol television broadcast system.

Especially but not exclusively for internet protocol television broadcast system it will be a great advantage to use the competing and executing nodes which are not monitored by a monitoring process of a system supervisor.

An embodiment of the system according to the invention is characterized in that the system comprises a server system wherein the nodes are server nodes or comprises a network system wherein the nodes are network nodes.

The server nodes may be in the same housing as the server storing means or not. The network nodes will usually each have their own housing. The network storing means may be in the same housing as one of the network nodes or not and then have their own housing.

The invention also relates to an executing node adapted to be used in a system comprising storing means adapted to store schedules and comprising executing nodes adapted to execute the schedules, which executing node according to the invention is characterized in that the executing node comprises checking means adapted to check the storing means based on a load of the executing node, collecting means adapted to collect first schedules on the executing node's own initiative, and marking means adapted to mark the schedules in the storing means.

The invention also relates to a method for executing schedules, which method according to the invention is characterized in that the method comprises the steps of checking storing means based on a load of a first executing node and collecting first schedules on an own initiative of the first executing node, said first schedules being marked in said storing means, and of checking the storing means based on a load of a second executing node and collecting second schedules on an own initiative of the second executing node, said second schedules being marked in said storing means.

The invention also relates to a computer program product for executing schedules, which computer program product according to the invention is characterized in that the computer program product comprises the functions of checking storing means based on a load of a first executing node and collecting first schedules on an own initiative of the first executing node and marking said first schedules in said storing means, and of checking the storing means based on a load of a second executing node and collecting second schedules on an own initiative of the second executing node and marking said second schedules in said storing means.

Embodiments of the executing node according to the invention and of the method according to the invention and of the computer program product according to the invention and of the medium according to the invention correspond with the embodiments of the system according to the invention.

The invention is based upon an insight, inter alia, that a monitoring process forms a so-called single point of failure, and is based upon a basic idea, inter alia, that the monitoring process can be avoided by letting the executing nodes check in dependence of their loads and collect on their own initiative and without being monitored by a monitoring process of a system supervisor.

The invention solves the problem, inter alia, to provide a system that is relatively simple The system according to the invention is further advantageous, inter alia, in that at least one so-called single point of failure has been removed (the monitoring process). This makes the system according to the invention more reliable.

These and other aspects of the invention will be apparent from and elucidated with reference to the embodiments(s) described hereinafter.
Fig. 1 shows diagrammatically a system according to the invention comprising storing means and executing nodes according to the invention,
Fig. 2 shows diagrammatically in greater detail storing means for use in a system according to the invention, and
Fig. 3 shows diagrammatically in greater detail a first executing node according to the invention and a second executing node according to the invention.

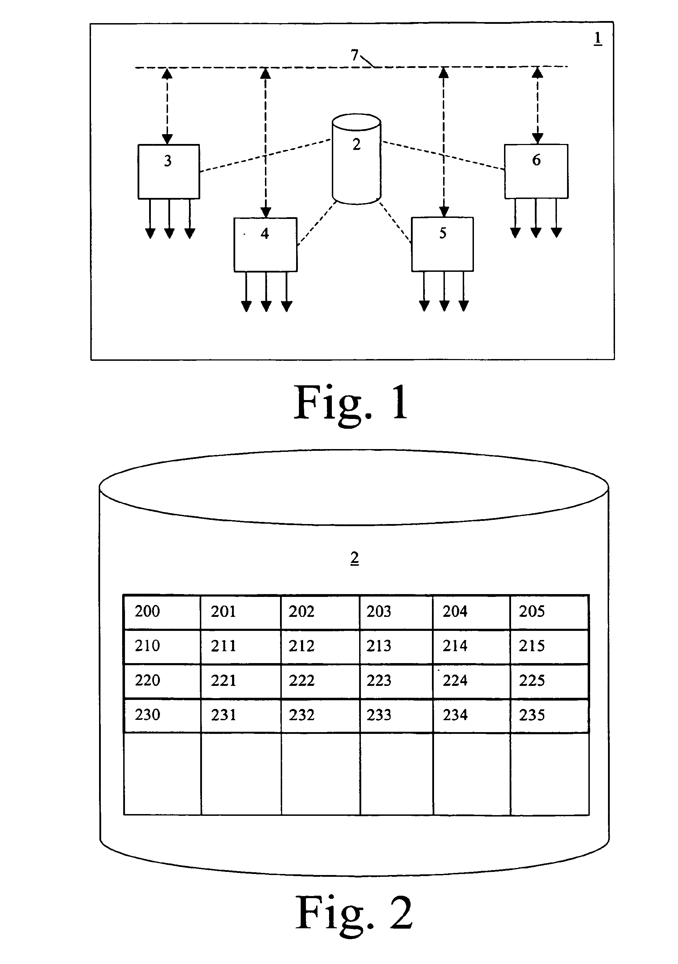

The system 1 according to the invention shown in Fig. 1 comprises four executing nodes 3-6. A receiving side of each executing node 3-6 is coupled to a supplier 7 and a transmitting side of each executing node 3-6 is coupled to further (executing or non-executing) nodes not shown. A control side of each executing node 3-6 is coupled to storing means 2 which are shown in Fig. 2 in greater detail. The system 1 may comprise a server system wherein the executing nodes 3-6 are server nodes or may comprise a network system wherein the executing nodes 3-6 are network nodes. The server nodes may be in the same housing as the server storing means or not. The network nodes will usually each have their own housing. The network storing means may be in the same housing as one of the network nodes or not and then have their own housing.

The storing means 2 shown in Fig. 2 comprise for example a table memory with rows and columns. Each row for example comprises one schedule defined by a start information and type information to be found in different columns. For example a schedule 200 is defined by a start time 201, a stop time 202, a type 203 and a destination 204. For example a schedule 210 is defined by a start time 211, a stop time 212, a type 203 and a destination 204 etc.

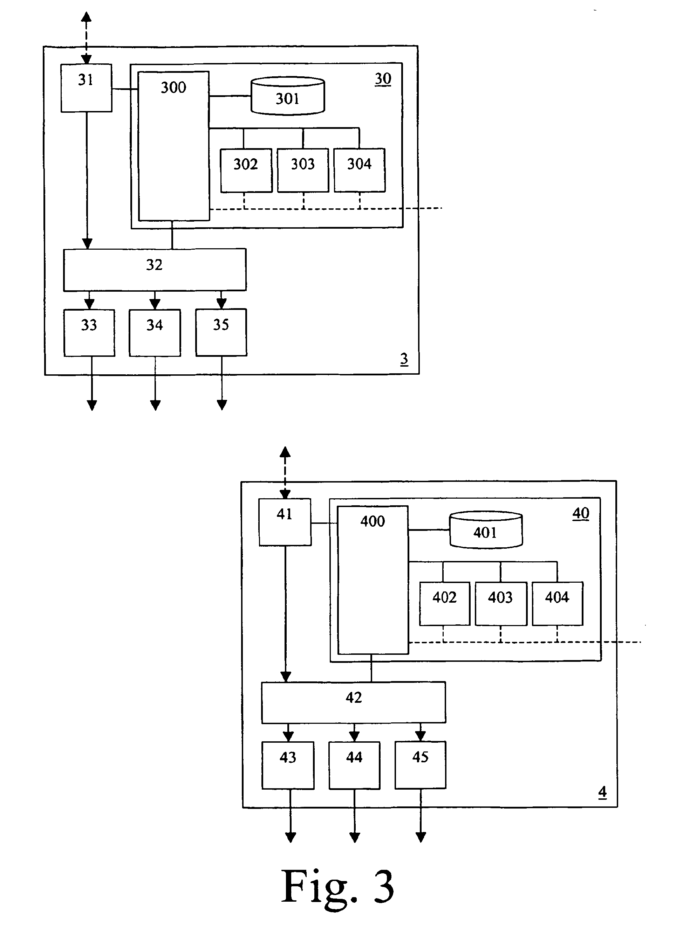

The first executing node 3 shown in Fig. 3 comprises a controller 30 coupled to a supplier interface 31, to a switch 32 and to node interfaces 33-35. The supplier interface 31 is further coupled to the supplier 7 shown in Fig. 1 and to the switch 32. The node interfaces 33-35 are further coupled to the switch 32 and to the further nodes not shown. The controller 30 for example comprises a first (hardware and/or software) scheduler 300 coupled to a memory 301, to first (hardware and/or software) checking means 302 for checking the storing means 2 in dependence of a first executing node's load and to first (hardware and/or software) collecting means 303 for collecting first schedules on the first executing node's own initiative from the storing means 2 and to first (hardware and/or software) marking means 304 for marking the first schedules in the storing means 2. These means 302-304 are thereto further coupled to the storing means 2.

The second executing node 4 shown in Fig. 3 comprises a controller 40 coupled to a supplier interface 41, to a switch 42 and to node interfaces 43-45. The supplier interface 41 is further coupled to the supplier 7 shown in Fig. 1 and to the switch 42. The node interfaces 43-45 are further coupled to the switch 42 and to the further nodes not shown. The controller 40 for example comprises a second (hardware and/or software) scheduler 400 coupled to a memory 401, to second (hardware and/or software) checking means 402 for checking the storing means 2 in dependence of a second executing node's load and to second (hardware and/or software) collecting means 403 for collecting second schedules on the second executing node's own initiative from the storing means 2 and to second (hardware and/or software) marking means 404 for marking the second schedules in the storing means 2. These means 402-404 are thereto further coupled to the storing means 2.

In a prior art situation, somewhere in the system 1, for example inside or near the storing means 2, there is a monitoring process for monitoring the nodes 3-6 for allocating the schedules 200, 210, 220, 230 stored in the storing means 2 to the different nodes 3-6 (one schedule can only be allocated to one node at a time). Such a monitoring process forms for example part of a system supervisor or is controlled by such a system supervisor. This monitoring process forms a so-called single point of failure. In case the monitoring process fails, the whole system fails. The monitoring process further increases a complexity of the system 1.

To avoid such a monitoring process, in the system 1 according to the invention, the first executing node 3 comprises the first checking means 302 for checking the storing means 2 in dependence of a first executing node's load and the first collecting means 303 for collecting first schedules on the first executing node's own initiative, and the second executing node 4 comprises the second checking means 402 for checking the storing means 2 in dependence of a second executing node's load and the second collecting means 403 for collecting second schedules on the second executing node's own initiative. By making the checking of the storing means by an executing node dependent on this executing node's load, a checking hierarchy has been created, to avoid prior art arbitration. Further, at least one so-called single point of failure has been removed by having removed the monitoring process. This increases the reliability of the system 1 according to the invention.

So, compared to a prior art situation, the executing nodes 3, 4 are no longer monitored by a system supervisor and are no longer instructed what to do. Contrary to that, the executing nodes 3, 4 check the storing means 2 on their own initiative, in dependence of their own load and independently from each other, and collect the schedules 200, 210, 220, 230 under two conditions. Firstly, a schedule 200, 210, 220, 230 must still be available to be collected by an executing node 3, 4, and secondly, the executing node 3, 4 must be willing and prepared and capable to collect the schedule 200,210,220,230.

To be sure that a schedule is still available to be collected by an executing node 3, 4 and to avoid that two executing nodes 3, 4 collide when checking and/or collecting schedules 200, 210, 220, 230, internal or external clocks of the executing nodes 3, 4 could be synchronized such that the checking and/or the collecting by the executing nodes 3, 4 are separated in time from each other and more than is strictly necessary. This however is a relatively inefficient solution.

According to a more efficient solution, the first executing node 3 comprises the first marking means 303 for marking the first schedules in the storing means 2 and the second executing node 4 comprises the second marking means 403 for marking the second schedules in the storing means 2. The first marking means 303 of the first executing node 3 for example mark a first schedule as "being executed" in case the first collecting means 302 of the first executing node 3 want to collect or are collecting or have collected this first schedule. As a result, the second checking means 402 of the second executing node 4 will, while checking the storing means 2, ignore or overlook or not even find this first schedule. Thereto, in the storing means 2, the schedules 200, 210, 220, 230 for example comprise the marks 205, 215, 225, 235.

The first scheduler 300 for example comprises a first event driven scheduler for controlling the memory 301 and the first means 302-304 and the second scheduler 400 for example comprises a second event driven scheduler for controlling the memory 401 and the second means 402-404. Alternatively, the first and second means 302-304, 402-404 may form part of the first and second schedulers.

Without the executing nodes 3, 4 being monitored by a monitoring process of a system supervisor, the executing nodes 3, 4 will be in competition with each other. So, the executing nodes 3, 4 compete for executing the schedules in a load balanced way. Thereto, each executing node 3, 4 may for example collect schedules until its maximum load has been reached. This however is a relatively non-elegant solution.

According to a relatively elegant solution, the first checking means 302 check the storing means 2 a first predefined time-interval ahead of an actual schedule and the second checking means 402 check the storing means 2 a second predefined time-interval ahead of an actual schedule, the first predefined time-interval depending on the first executing node's load and the second predefined time-interval depending on the second executing node's load. This way, a node that is not executing a schedule or that has not collected a schedule yet checks for example a time-interval T ahead of an actual schedule (or an actual time), a node that is executing one schedule or that has collected one schedule so far checks for example a time-interval T-Δt ahead of an actual schedule (or an actual time), a node that is executing two schedules or that has collected two schedules so far checks for example a time-interval T-2 Δt ahead of an actual schedule (or an actual time) etc. A node that is executing N schedules or that has collected N schedules so far checks for example a time-interval T-(N-1) Δt ahead of an actual schedule (or an actual time), whereby (N-1) Δt < T. As a result, the node that has the most capacity available has the primary choice and the node that has second most capacity available has the secondary choice etc. Other and/or further dependencies are not to be excluded, such as for example an individual Tᵢ per node and an individual Δtᵢ per node.

The schedules 200, 210, 220, 230 are defined by time information 201, 202, 211, 212, 221, 222, 231, 232 and type information 203, 204, 213, 214, 223, 224, 233, 234. The time information 201, 202, 211, 212, 221, 222, 231, 232 comprises a start time 201, 211, 221, 231 and a stop time 202, 212, 222, 232 and the type information 203, 204, 213, 214, 223, 224, 233, 234 defines a type 203, 213, 223, 233 and a destination 204, 214, 224, 234. The destination 204, 214, 224, 234 may be in the form of an internet protocol address, without excluding other addresses such as medium access control addresses and uniform resource locators. The type 203, 213, 223, 233 for example defines a broadcast or a content distribution or a content delivery.

The executing nodes 3-6 may form a cluster of nodes, with the cluster of nodes being load balanced. One of the executing nodes 3-6 may further be a primary node and one other of the executing nodes 3-6 may further be a secondary node, with the primary node being more privileged than the secondary nodes. Alternatively, several of the executing nodes 3-6 may be primary nodes and several of the other executing nodes 3-6 may be secondary nodes etc. Dependencies and privileges may be combined arbitrarily.

Especially but not exclusively for internet protocol television broadcast system it will be a great advantage to use the competing and executing nodes 3-6 which are not monitored by a monitoring process of a system supervisor. For such an internet protocol television broadcast system, a schedule 200 for example defines that at a start time 20h00 until a stop time 22h00 a content delivery A is to be delivered to a destination B, and a schedule 210 for example defines that at a start time 23h00 until a stop time 24h00 a content delivery C is to be delivered to a destination D. Then, the first executing node that for example checks the storing means ten hours in advance (as defined by its load) will find at 10h00 the schedule 200 and will mark it as being executed and will find at 13h00 the schedule 210 and will mark it as being executed. Then, for example shortly before 20h00, the first executing node will collect and/or receive the entire content delivery A or at least a part of the content delivery A from the supplier and will start passing this entire content delivery or this part of the content delivery to the destination B etc. and, for example shortly before 23h00, the first executing node will collect and/or receive the entire content delivery C or at least a part of the content delivery C from the supplier and will start passing this entire content delivery or this part of the content delivery to the destination D etc.

In case the first executing node cannot handle both content deliveries A and C that shortly after each other, the first executing node will not mark the schedule 210 as being executed, and the second executing node that for example checks the storing means six hours in advance (as defined by its load) will find at 17h00 the schedule 210 and will mark it as being executed. Then, for example shortly before 23h00, the second executing node will collect and/or receive the entire content delivery C or at least a part of the content delivery C from the supplier and will start passing this entire content delivery or this part of the content delivery to the destination D etc.

In case the first executing node goes down at 12h00, the schedule 200 has already been marked by the first executing node but the schedule 210 has not yet been marked. The second executing node that for example checks the storing means six hours in advance (as defined by its load) will find at 17h00 the schedule 210 and will mark it as being executed etc. For the schedule 200, two options exist. According to a first option, in case the storing means is informed of the first executing node having gone down, the storing means might delete the mark introduced by the first executing node and as a result the second executing node that for example checks the storing means six hours in advance (as defined by its load) will find at 14h00 the schedule 200 and will mark it as being executed etc. According to a second option, in case the storing means is not informed of the first executing node having gone down, the schedule 200 will be lost.

The invention has the following advantages over prior art solutions. Firstly, resilient internet protocol television broadcasts and content distribution services are implemented in a distributed content delivery/video server network without the mentioned single point of failure being present. Secondly, the need for monitoring processes and their associated overhead has been removed. Thirdly, a loss of N-1 executing nodes is tolerated. Fourthly, it can be implemented on low cost general purpose computers because it does not rely on high availability monitoring processes. And fifthly, it can easily scale up and down because there is no inter-node communication involved.

In Fig. 1 and 3, each coupling / connection may be a wired coupling / connection or a wireless coupling / connection. Any unit shown may be divided into sub-units, and any two or more units may be integrated into a new and larger unit. Any unit shown may comprise hardware and/or software. The computer program product according to the invention for executing schedules 200, 210, 220, 230 may be stored on a fixed medium such as the memory 301, 401 or on a removable medium not shown. A particular incarnation of the storing means might be a memory or a database, but other incarnations can be used for storing schedules as well, if they are accessible by the execution nodes for checking for new schedules either directly or indirectly via proxy solutions.

The expression "for" in for example "for storing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities. The word "means" may comprise a single means or a single unit or a plurality of means or a plurality of units.

The steps and/or functions of checking and collecting do not exclude further steps and/or functions, like for example, inter alia, the steps and/or functions described for the Figures etc. Between each pair of blocks shown in the Figures, a further block not shown may be present, and in addition to a block shown in the Figures, a further block not shown and coupled to this block shown may be present etc.

## Claims

1. System (1) comprising storing means (2) adapted to store schedules (200, 210, 220, 230) and comprising executing nodes (3, 4, 5, 6) adapted to execute the schedules (200, 210, 220, 230),
***characterized in that*** the executing nodes (3, 4, 5, 6) comprise a first executing node (3) and a second executing node (4),
***in that*** the first executing node (3) comprises first checking means (302) adapted to check the storing means (2) based on a load of said first executing node, first collecting means (303) adapted to collect first schedules based on an own initiative of said first executing node, and first marking means (304) adapted to mark the first schedules in the storing means (2)
*and **in that*** the second executing node (4) comprises second checking means (402) adapted to check the storing means (2) based on a load of said second executing node, second collecting means (403) adapted to collect second schedules based on an own initiative of said second executing node, and second marking means (404) adapted to mark the second schedules in the storing means (2).

2. System (1) as defined in claim 1, **characterized in that** the first executing node (3) comprises a first event driven scheduler (300) adapted to control the first means (302-304) and **in that** the second executing node (4) comprises a second event driven scheduler (400) adapted to control the second means (402-404).

3. System (1) as defined in claim 1 or 2, **characterized in that** the executing nodes (3, 4, 5, 6) compete for executing the schedules (200, 210, 220, 230) in a load balanced way.

4. System (1) as defined in claim 1, 2 or 3, **characterized in that** the first checking means (302) is adapted to check the storing means (2) a first predefined time-interval ahead of an actual schedule and the second checking means (402) is adapted to check the storing means (2) a second predefined time-interval ahead of an actual schedule, the first predefined time-interval depending on the load of the first executing node and the second predefined time-interval depending on the load of the second executing node.

5. System (1) as defined in claim 1, 2, 3 or 4, **characterized in that** the schedules (200, 210, 220, 230) are defined by time information (201, 202, 211, 212, 221, 222, 231, 232) and type information (203, 204, 213, 214, 223, 224, 233, 234).

6. System (1) as defined in claim 5, **characterized in that** the time information (201, 202, 211, 212, 221, 222, 231, 232) comprises a start time (201, 211, 221, 231) and a stop time (202, 212, 222, 232) and **in that** the type information (203, 204, 213, 214, 223, 224, 233, 234) defines a type (203, 213, 223, 233) and a destination (204, 214, 224, 234).

7. System (1) as defined in claim 1, 2, 3, 4, 5 or 6, **characterized in that** the executing nodes (3, 4, 5, 6) form a cluster of nodes, the cluster of nodes being adapted to deliver services in a load balanced way.

8. System (1) as defined in claim 1, 2, 3, 4, 5 or 6, **characterized in that** the system (1) comprises an internet protocol television broadcast system.

9. System (1) as defined in claim 1, 2, 3, 4, 5 or 6, **characterized in that** the system (1) comprises a server system wherein the executing nodes (3, 4, 5, 6) are server nodes or comprises a network system wherein the executing nodes (3, 4, 5, 6) are network nodes.

10. Executing node (3) adapted to be used in the system (1) of claim 1, the system comprising storing means (2) adapted to store schedules (200, 210, 220, 230) and comprising executing nodes (3, 4, 5, 6) adapted to execute the schedules (200, 210, 220, 230), **characterized in that** the executing node (3) comprises checking means (302) adapted to check the storing means (2) based on a load of the executing node, collecting means (303) adapted to collect first schedules on the executing; node's own initiative, and marking means (304) adapted to mark the schedules in the storing means (2).

11. Method for executing schedules (200, 210, 220, 230), **characterized in that** the method comprises the steps of checking storing means (2) based on a load of a first executing node (3) and collecting first schedules on an own initiative of the first executing node (3), said first schedules being marked in said storing means (2), and of checking the storing means (2) based on a load of a second executing node (4) and collecting second schedules on an own initiative of the second executing node (4), said second schedules being marked in said storing means (2).

12. Computer program product for executing schedules (200, 210, 220, 230), **characterized in that** the computer program product comprises the functions of checking storing means (2) based on a load of a first executing node (3) and collecting first schedules on an own initiative of the first executing node (3) and marking said first schedules in said storing means (2), and of checking the storing means (2) based on a load of a second executing node (4) and collecting second schedules on an own initiative of the second executing node (4) and marking said second schedules in said storing means (2).

## Patentansprüche

1. System (1) umfassend Speichermitteln (2), welche dazu ausgelegt sind, Ablaufpläne (200, 210, 220, 230) zu speichern, sowie Ausführungsknoten (3, 4, 5, 6), welche dazu ausgelegt sind, die Ablaufpläne (200, 210, 220, 230) auszuführen,
***dadurch gekennzeichnet, dass*** die Ausführungsknoten (3, 4, 5, 6) einen ersten Ausführungsknoten (3) und einen zweiten Ausführungsknoten (4) umfassen,
*dass* der erste Ausführungsknoten (3) erste Prüfmittel (302), welche dazu ausgelegt sind, die Speichermittel (2) auf der Basis einer Last des besagten ersten Ausführungsknoten zu prüfen, erste Sammelmittel (303), welche dazu ausgelegt sind, erste Ablaufpläne auf der Basis einer Eigeninitiative des besagten ersten Ausführungsknotens zu sammeln, und erste Markierungsmittel (304), welche dazu ausgelegt sind, die ersten Ablaufpläne in dem Speichermittel (2) zu markieren, umfasst,
*und dass* der zweite Ausführungsknoten (4) zweite Prüfmittel (402), welche dazu ausgelegt sind, die Speichermittel (2) auf der Basis einer Last des besagten zweiten Ausführungsknoten zu prüfen, zweite Sammelmittel (403), welche dazu ausgelegt sind, zweite Ablaufpläne auf der Basis einer Eigeninitiative des besagten zweiten Ausführungsknotens zu sammeln, und zweite Markierungsmittel (404), welche dazu ausgelegt sind, die zweiten Ablaufpläne in dem Speichermittel (2) zu markieren, umfasst.

2. System (1) nach Anspruch 1, **dadurch gekennzeichnet, dass** der erste Ausführungsknoten (3) einen ersten ereignisgesteuerten Ablaufplan (300) umfasst, welcher dazu ausgelegt ist, die ersten Mittel (302-304) zu steuern, und dass der zweite Ausführungsknoten (4) einen zweiten ereignisgesteuerten Ablaufplan (400) umfasst, welcher dazu ausgelegt ist, die zweiten Mittel (402-404) zu steuern.

3. System (1) nach Anspruch 1 oder 2, **dadurch gekennzeichnet, dass** die Ausführungsknoten (3, 4, 5, 6) für das Ausführen der Ablaufpläne (200, 210, 220, 230) bei verteilter Last konkurrieren.

4. System (1) nach Anspruch 1, 2 oder 3, **dadurch gekennzeichnet, dass** das erste Prüfmittel (302) dazu ausgelegt ist, die Speichermittel (2) in einem ersten vorgegebenen, einem gegenwärtigen Ablaufplan vorausgehenden Zeitintervall zu prüfen, und dass das zweite Prüfmittel (402) dazu ausgelegt ist, die Speichermittel (2) in einem zweiten vorgegebenen, einem gegenwärtigen Ablaufplan vorausgehenden Zeitintervall zu prüfen, wobei das erste vorgegebene Zeitintervall von der Last des ersten Ausführungsknotens und das zweite vorgegebene Zeitintervall von der Last des zweiten Ausführungsknotens abhängt.

5. System (1) nach Anspruch 1, 2, 3 oder 4, **dadurch gekennzeichnet, dass** die Ablaufpläne (200, 210, 220, 230) durch Zeitinformationen (201, 202, 211, 212, 221, 222, 231, 232) und Typinformationen (203, 204, 213, 214, 223, 224, 233, 234) definiert werden.

6. System (1) nach Anspruch 5, **dadurch gekennzeichnet, dass** die Zeitinformationen (201, 202, 211, 212, 221, 222, 231, 232) eine Startzeit (201, 211, 221, 231) und eine Stoppzeit (202, 212, 222, 232) umfassen, und dass die Typinformationen (203, 204, 213, 214, 223, 224, 233, 234) einen Typ (203, 213, 223, 233) und ein Ziel (204, 214, 224, 234) definieren.

7. System (1) nach Anspruch 1, 2, 3, 4, 5 oder 6, **dadurch gekennzeichnet, dass** die Ausführungsknoten (3, 4, 5, 6) einen Knoten-Cluster bilden, wobei der Knoten-Cluster dazu ausgelegt ist, Dienste bei verteilter Last bereitzustellen.

8. System (1) nach Anspruch 1, 2, 3, 4, 5 oder 6, **dadurch gekennzeichnet, dass** das System (1) ein Internet-Protokoll-Fernsehrundfunk-System umfasst.

9. System (1) nach Anspruch 1, 2, 3, 4, 5 oder 6, **dadurch gekennzeichnet, dass** das System (1) ein Serversystem, in welchem die Ausführungsknoten (3, 4, 5, 6) Serverknoten sind, oder ein Netzwerksystem, in welchem die Ausführungsknoten (3, 4, 5, 6) Netzwerkknoten sind, umfasst.

10. Ausführungsknoten (3), welcher für die Verwendung in dem System (1) nach Anspruch 1 ausgelegt ist, wobei das System Speichermittel (2), welche für das Speichern von Ablaufplänen (200, 210, 220, 230) ausgelegt sind, sowie Ausführungsknoten (3, 4, 5, 6), welche für das Ausführen der Ablaufpläne (200, 210, 220, 230) ausgelegt sind, umfasst, **dadurch gekennzeichnet, dass** der Ausführungsknoten (3) Prüfmittel (302), welche für das Prüfen der Speichermittel (2) auf der Basis einer Last des Ausführungsknotens ausgelegt sind, Sammelmittel (303), welche für das Sammeln von ersten Ablaufplänen auf Eigeninitiative des Ausführungsknotens ausgelegt sind, und Markierungsmittel (304), welche für das Markieren der Ablaufpläne in den Speichermitteln (2) ausgelegt sind, umfasst.

11. Verfahren zum Ausführen von Ablaufplänen (200, 210, 220, 230), **dadurch gekennzeichnet, dass** das Verfahren die Schritte des Prüfens der Speichermittel (2) auf der Basis einer Last eines ersten Ausführungsknotens (3) und des Sammelns der ersten Ablaufpläne auf Eigeninitiative des ersten Ausführungsknotens (3), wobei die besagten ersten Ablaufpläne in den besagten Speichermitteln (2) markiert werden, und des Prüfens der Speichermittel (2) auf der Basis einer Last eines zweiten Ausführungsknotens (4) und des Sammelns der zweiten Ablaufpläne auf Eigeninitiative des zweiten Ausführungsknotens (4), wobei die besagten zweiten Ablaufpläne in den besagten Speichermitteln (2) markiert werden, umfasst.

12. Computerprogramm-Produkt zum Ausführen von Ablaufplänen (200, 210, 220, 230), **dadurch gekennzeichnet, dass** das Computerprogramm-Produkt die Funktionen des Prüfens der Speichermittel (2) auf der Basis einer Last eines ersten Ausführungsknotens (3) und des Sammelns der ersten Ablaufpläne auf Eigeninitiative des ersten Ausführungsknotens (3) und des Markierens der besagten ersten Ablaufpläne in den besagten Speichermitteln (2), und des Prüfens der Speichermittel (2) auf der Basis einer Last eines zweiten Ausführungsknotens (4) und des Sammelns der zweiten Ablaufpläne auf Eigeninitiative des zweiten Ausführungsknotens (4) und des Markierens der besagten zweiten Ablaufpläne in den besagten Speichermitteln (2) umfasst.

## Revendications

1. Système (1) comprenant des moyens de stockage (2) adaptés pour stocker des planifications (200, 210, 220, 230) et comprenant des noeuds d'exécution (3, 4, 5, 6) adaptés pour exécuter les planifications (200, 210, 220, 230),
***caractérisé en ce que*** les noeuds d'exécution (3, 4, 5, 6) comprennent un premier noeud d'exécution (3) et un deuxième noeud d'exécution (4),
***en ce que*** le premier noeud d'exécution (3) comprend des premiers moyens de vérification (302) adaptés pour vérifier les moyens de stockage (2) en se basant sur une charge dudit premier noeud d'exécution, des premiers moyens de collecte (303) adaptés pour collecter les premières planifications en se basant sur la propre initiative dudit premier noeud d'exécution, et des premiers moyens de marquage (304) adaptés pour marquer les premières planifications dans les moyens de stockage (2),
*et **en ce que*** le deuxième noeud d'exécution (4) comprend des deuxièmes moyens de vérification (402) adaptés pour vérifier les moyens de stockage (2) en se basant sur une charge dudit deuxième noeud d'exécution, les deuxièmes moyens de collecte (403) adaptés pour collecter les deuxièmes planifications en se basant sur la propre initiative dudit deuxième noeud d'exécution, et les deuxièmes moyens de marquage (404) adaptés pour marquer les deuxièmes planifications dans les moyens de stockage (2).

2. Système (1) selon la revendication 1, **caractérisé en ce que** le premier noeud d'exécution (3) comprend un premier dispositif de planification guidé par les évènements (300) adapté pour commander les premiers moyens (302-304) et **en ce que** le deuxième noeud d'exécution (4) comprend un deuxième dispositif de planification guidé par les évènements (400) adapté pour commander les deuxièmes moyens (402-404).

3. Système (1) selon la revendication 1 ou 2, **caractérisé en ce que** les noeuds d'exécution (3, 4, 5, 6) entrent en compétition pour une exécution à équilibrage de charge des planifications (200, 210, 220, 230).

4. Système (1) selon la revendication 1, 2 ou 3, **caractérisé en ce que** les premiers moyens de vérification (302) sont adaptés pour vérifier les moyens de stockage (2) à un premier intervalle temporel prédéfini précédant une planification réelle et les deuxièmes moyens de vérification (402) sont adaptés pour vérifier les moyens de stockage (2) à un deuxième intervalle temporel prédéfini précédant une planification réelle, le premier intervalle temporel prédéfini étant fonction de la charge du premier noeud d'exécution et le deuxième intervalle temporel prédéfini étant fonction de la charge du deuxième noeud d'exécution.

5. Système (1) selon la revendication 1, 2, 3 ou 4, **caractérisé en ce que** les planifications (200, 210, 220, 230) sont définies par des informations de temps (201, 202, 211, 212, 221, 222, 231, 232) et par des informations de type (203, 204, 213, 214, 223, 224, 233, 234).

6. Système (1) selon la revendication 5, **caractérisé en ce que** les informations de temps (201, 202, 211, 212, 221, 222, 231, 232) comprennent un temps de démarrage (201, 211, 221, 231) et un temps d'arrêt (202, 212, 222, 232) et **en ce que** les informations de type (203, 204, 213, 214, 223, 224, 233, 234) définissent un type (203, 213, 223, 233) et une destination (204, 214, 224, 234).

7. Système (1) selon la revendication 1, 2, 3, 4, 5 ou 6, **caractérisé en ce que** les noeuds d'exécution (3, 4, 5, 6) forment un groupe de noeuds, le groupe de noeuds étant adapté pour une fourniture à équilibrage de charge des services.

8. Système (1) selon la revendication 1, 2, 3, 4, 5 ou 6, **caractérisé en ce que** le système (1) comprend un système de télédiffusion à protocole Internet.

9. Système (1) selon la revendication 1, 2, 3, 4, 5 ou 6, **caractérisé en ce que** le système (1) comprend un système de serveur dans lequel les noeuds d'exécution (3, 4, 5, 6) sont des noeuds de serveur ou comprend un système de réseau dans lequel les noeuds d'exécution (3, 4, 5, 6) sont des noeuds de réseau.

10. Noeud d'exécution (3) adapté pour être utilisé dans le système (1) selon la revendication 1, le système comprenant des moyens de stockage (2) adaptés pour stocker des planifications (200, 210, 220, 230) et comprenant des noeuds d'exécution (3, 4, 5, 6) adaptés pour exécuter les planifications (200, 210, 220, 230), **caractérisé en ce que** le noeud d'exécution (3) comprend des moyens de vérification (302) adaptés pour vérifier les moyens de stockage (2) en se basant sur une charge du noeud d'exécution, des moyens de collecte (303) adaptés pour collecter les premières planifications sur la propre initiative du noeud d'exécution, et des moyens de marquage (304) adaptés pour marquer les planifications dans les moyens de stockage (2).

11. Procédé d'exécution des planifications (200, 210, 220, 230), **caractérisé en ce que** le procédé comprend les étapes de vérification des moyens de stockage (2) en se basant sur une charge d'un premier noeud d'exécution (3) et de collecte des premières planifications sur la propre initiative du premier noeud d'exécution (3), lesdites premières planifications étant marquées dans lesdits moyens de stockage (2), et de vérification des moyens de stockage (2) en se basant sur une charge d'un deuxième noeud d'exécution (4) et de collecte des deuxièmes planifications sur la propre initiative du deuxième noeud d'exécution (4), lesdites deuxièmes planifications étant marquées dans lesdits moyens de stockage (2).

12. Produit de programme informatique pour exécuter des planifications (200, 210, 220, 230), **caractérisé en ce que** le produit de programme informatique comprend les fonctions de vérification des moyens de stockage (2) en se basant sur une charge d'un premier noeud d'exécution (3), de collecte des premières planifications sur la propre initiative du premier noeud d'exécution (3) et de marquage desdites premières planifications, dans lesdits moyens de stockage (2), et de vérification des moyens de stockage (2) en se basant sur une charge d'un deuxième noeud d'exécution (4) et de collecte des deuxièmes planifications sur la propre initiative du deuxième noeud d'exécution (4) et de marquage desdites deuxièmes planifications dans lesdits moyens de stockage (2).
